# EUROPÄISCHE PATENTANMELDUNG

(11) **EP 1 079 287 A1**
(43) Veröffentlichungstag der Anmeldung: **28.02.2001**
(21) Anmeldenummer: 00116554.7
(22) Anmeldetag: 01.08.2000
(51) Int. Cl.: G05B 19/042, G05B 19/418

(54) **Online-Diagnose für ein Diagnose-Gerät und Diagnose-Gerät**

(30) Priorität: 24.08.1999 DE 19940149
(71) Anmelder: SEW-EURODRIVE GMBH & CO., D-76646 Bruchsal (DE)
(72) Erfinder: Dunker, Raphael, 76694 Forst (DE); Brecht, Roland, 76307 Karlsbad (DE)

(57) **Zusammenfassung**

Online-Diagnose für ein Diagnose-Gerät wobei sie problemorientiert, benutzergeführt und interaktiv ist, und wobei sie bei einem Feldgerät oder Antriebsumrichter angewendet wird, und wobei Parameter des Antriebsumrichters oder Feldgerätes durch das Diagnose-Gerät beeinflussbar und Daten oder Informationen zwischen Antriebsumrichter und Diagnose-Gerät übertragbar sind, wobei das Diagnosegerät Daten oder Informationen mit einem ersten Netzwerk tauscht, und wobei das Feldgerät oder der Antriebsumrichter Daten oder Informationen mit einem zweiten Netzwerk tauscht, und wobei erstes und zweites Netzwerk Daten oder Informationen entweder direkt oder indirekt austauschen.

## Beschreibung

Die Erfindung betrifft eine Online-Diagnose für ein Diagnose-Gerät und ein Diagnose-Gerät.

Aus dem Internet und aus der Hilfefunktion der meisten Software-Produkte sind FAQ, also 'frequently asked questions' bekannt. Probleme, die oft auftreten werden dabei vom Hersteller dokumentiert und im Klartext formuliert, und stehen dem Anwender in einer Liste der häufigst gestellten Fragen (FAQ, Frequently asked questions) zur Verfügung, so dass er nur noch den Text heraussuchen muss, der sein Problem beschreibt. Diese FAQ liegen entweder in gedruckter Form, beispielsweise als Handbuch, oder in elektronischer Form in einer Datei, also am Bildschirm sichtbar, vor. Nachteilig ist dabei, dass bei zunehmender Menge an Fragen die Übersichtlichkeit erschwert wird und der Kunde oder Nutzer sich durch die ganze FAQ-Sammlung durcharbeiten muss. Auch ein Thesaurus oder eine Verschlagwortung vermindern das Problem nur unwesentlich, da dann die Inhaltsliste ebenfalls bis zur Unübersichtlichkeit anwächst. Die FAQ sind meist in der Form formuliert, die der Kunde üblicherweise gebraucht. Der Kunde hat nämlich ein Hintergrundwissen, das nicht automatisierbar ist. Beispielsweise erzeugt das System die Fehlermeldung für ein nicht erkanntes CD-Laufwerk. Der Kunde weiß aber, ob ein solches überhaupt physikalisch vorhanden ist oder nicht.

Automatisierungsanlagen werden zunehmend komplexer. Eine Automatisierungsanlage umfasst verschiedene Netzwerke mit zwischengeschalteten Geräten. Die unterste Ebene bilden beispielsweise Feldgeräte, wie Antriebsumrichter, Ein-/Ausgabe-Module oder dergleichen. Solche Feldgeräte sind mit einem Feldbus, wie Profibus, Interbus, CAN-Bus oder dergleichen, untereinander verbunden. Außerdem ist der Feldbus mit einer Steuerung oder einem Automatisierungsgerät verbunden. Dieses kann wiederum an ein Netzwerk angeschlossen sein, das die Leitebene darstellt und als Ethernet oder dergleichen ausgeführt wird. Dieses Netzwerk der Leitebene ist meist räumlich auf die Anlage begrenzt ausgebildet. Ein Zentralrechner ist bei manchen Anwendungen an ein weiteres Netzwerk, wie ein Intranet oder dergleichen, angeschlossen. Über spezielle weitere Geräte, also Rechenanlagen, ist dieses Intranet mit dem Internet verbunden. In der hier kurz skizzierten Darstellung sind nur die Grundtypen erwähnt. Es sind Automatisierungsanlagen mit mehr oder weniger Netzwerken und verschiedenen Netztopologien im Einsatz.

Vom Kunden oder Anwender werden, insbesondere beispielsweise durch den Einsatz von Feldbussystemen oder intelligenten dezentralen Steuerungseinheiten, immer umfassendere Systemkenntnisse erwartet. Diese muss er sich in der Regel selbst aneignen. Erschwerend ist dabei, dass die eingesetzten Automatisierungskomponenten häufig nur ihre eigene Funktionalität im Anlagenverbund dokumentieren und analysieren.

In Zukunft wird es jedoch immer wichtiger, die Integrationsmöglichkeiten, beispielsweise eines Antriebsumrichters, in einfacher Art und Weise zu beschreiben um somit dem Anwender die Einordnung in 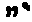 sein" System zu vereinfachen. Dazu gehören auch Diagnosemöglichkeiten der Automatisierungsgeräte, die über die Diagnose des eigenen Geräteverhaltens hinaus gehen.

Aus der Seite http://www.sew-eurodrive.de/german/frame_d.htm (Technische Dokumentation) ist ein Handbuch für das Feldbusgeräteprofil eines MOVIDRIVE Antriebsumrichters der SEW-EURODRIVE GmbH &Co bekannt. Dort wird eine einfache System- oder Busdiagnose beschrieben. Dabei wird nicht nur das Monitoring von Daten eines Antriebssystems ermöglicht, sondern auch das Monitoring von Prozesswerten, die von anderen über Netzwerk verbundenen Automatisierungseinheiten kommen.

Für den Kunden sind die Menge und Interpretation der Diagnosedaten, also Zusammenhänge und Aussagekraft verschiedener Diagnoseinformationen, eine immer größere Anforderung, der er immer weniger gewachsen ist und daher der kostspielige Einsatz von Service-Zentralen oder - Personal vermehrt in Anspruch genommen wird.

Der Erfindung liegt daher die Aufgabe zugrunde, eine Online-Diagnose für ein Diagnose-Gerät und ein Diagnose-Gerät weiterzubilden unter Vermeidung der vorgenannten Nachteile. Insbesondere soll es den Kunden in die Lage versetzen, ohne Inanspruchnahme von Service-Zentralen oder -Personal seine Probleme zu lösen.

Erfindungsgemäß wird die Aufgabe bei einer Online-Diagnose für ein Diagnose-Gerät nach den in Anspruch 1 angegebenen Merkmalen oder nach den in Anspruch 2 angegebenen Merkmalen und bei einem Diagnose-Gerät nach den in Anspruch 9 angegebenen Merkmalen oder nach den in Anspruch 10 angegebenen Merkmalen. Ein wesentliches Merkmal der Erfindung ist bei der Online-Diagnose, dass sie problemorientiert, benutzergeführt und interaktiv ist.

Dabei bedeutet problemorientiert, dass, wie schon oben beschrieben, der Informations- oder Wissensinhalt der Online-Diagnose die häufig von Kunden gestellten Fragen vorteilhafterweise umfasst. Außerdem sind jeder Frage auch mindestens eine Antwort zugeordnet.

Benutzergeführt bedeutet, dass alle zur Fehlereingrenzung notwendigen Systeminformationen vom Anwender in einfachen Sätzen oder auf akustische oder graphische Art und Weise erfragt werden. Der sequenzielle Ablauf des Diagnoseprogramms wird also vorteilhaft auf diese Weise steuerbar.

Interaktiv bedeutet, dass die Antwort auf eine Frage fallspezifisch ausfällt, also abhängig von weiterer Information oder Eingaben vom Kunden oder abhängig von weiterer Information vom System, wie Parameterwerte des Antriebsumrichters oder dergleichen. In Weiterbildung wird von der Online-Diagnose sogar ein Vorschlag für den Kunden angeboten, den der Kunde annehmen kann. Danach wird der Vorschlag der Online-Diagnose ausgeführt, also ein Beschreiben von Parametern des Antriebsumrichters oder dergleichen.

Interaktiv bedeutet bei der Erfindung auch, dass in Abhängigkeit von den Eingaben des Kunden verschiedene Geräteinformationen gelesen und angezeigt werden und darüber hinaus auch in bezug auf sein System ausführlich kommentiert werden.

Ein weiteres wesentliches Merkmal der Erfindung ist also, dass sie problemorientiert, benutzergeführt und interaktiv ist. Die Kombination dieser drei Eigenschaften eröffnet der Online-Diagnose völlig neue Möglichkeiten. Das in der Online-Diagnose enthaltene Wissen kann dem Kunden oder Nutzer in einer äußerst effektiven und sinnvollen Weise schnell und übersichtlich zur Verfügung stehen. Außerdem ist dieses Wissen sehr gut strukturiert und daher mit einem hohen Informationswert oder Informationsgehalt angereichert.

Ein weiteres wesentliches Merkmal der Erfindung ist, dass die Online-Diagnose dem Kunden Ratschläge gibt und Hinweise über mögliche Fehleinstellungen oder Informationen zur Fehlerbeseitigung gibt, die gegebenfalls auch sofort korrigiert werden.

Ein wesentlicher Vorteil ist dabei, dass die Online-Diagnose direkt mit dem Antriebsumrichter über eine Kommunikationsschnittstelle verbunden ist und den Anwender in einfacher Weise auf die Ursache des Problems führt und ihm Ratschläge und Informationen gibt zur Fehlerbeseitigung.

Wesentlich für die Erfindung ist des weiteren, dass sie bei einem Feldgerät oder Antriebsumrichter angewendet wird. Vorteilhaft ist dabei, dass der Kunde mit der Online-Diagnose Probleme der Antriebs- und Automatisierungstechnik lösen kann. Denn gerade in der Automatisierungstechnik werden Feldgeräte oder Antriebsumrichter in komplexen Anlagen an sehr komplexe Netzwerke angeschlossen, wobei die Netzwerke und die jeweiligen Feldgeräte nicht von derselben Art oder vom selben Hersteller sind und trotzdem zusammenarbeiten müssen. Gerade diese für die Antriebs- und Automatisierungstechnik wichtige Problemstellung ist die Erfindung in der Lage, eine Lösung anzubieten.

Ein weiteres wesentliches Merkmal der Erfindung ist, dass Parameter des Antriebsumrichters vorteilhafterweise durch das Diagnose-Gerät beeinflussbar und Daten oder Informationen zwischen Antriebsumrichter und Diagnose-Gerät übertragbar sind.

Weiter ist erfindungsgemäß das Diagnosegerät zum Austausch von Daten oder Informationen mit einem ersten Netzwerk verbindbar und das Feldgerät oder der Antriebsumrichter zum Austausch von Daten oder Informationen mit einem zweiten Netzwerk, wobei erstes und zweites Netzwerk Daten oder Informationen übertragen.

Bei der weiteren erfindungsgemäßen Online-Diagnose ist das Diagnosegerät zum Austausch von Daten oder Informationen mit dem Feldgerät oder Antriebsumrichter zum Austausch von Daten oder Informationen verbunden. Zu einer solchen Verbindung zählt auch ein Systembus, für dessen Anschluss Diagnosegerät und Feldgerät jeweils eine Kommunikationsschnittstelle aufweisen. Der Austausch von Daten oder Informationen erfolgt dann in einem Protokoll des Systembusses. Vorteilhaft ist dabei, dass ein schneller Austausch von Daten ermöglicht wird und zusätzlich das herstellereigene Systembus-Protokoll verwendbar ist, das vorteilhafterweise eine erhöhte Kompatibilität aufweist und spezifisch auf die Problematik der jeweiligen Feldgeräte und Antriebsumrichter zugeschnitten ist.

Bei einer vorteilhaften Ausgestaltung sind erstes und zweites Netzwerk identisch oder als Schnittstelle, insbesondere als Systembus, ausgebildet. Dabei entfallen vorteilhafterweise weitere Geräte.

Bei einer weiteren vorteilhaften Ausgestaltung sind erstes und zweites Netzwerk über mindestens ein Gerät, insbesondere einen Rechner, verbunden oder Daten oder Informationen übertragen. Von Vorteil ist dabei, dass das Diagnose-Gerät die Daten in ein anderes Netzwerk einspielen kann. Dies bedeutet auch, dass das Diagnose-Gerät an einem anderen Ort positionierbar ist als das Feldgerät oder der Antriebsumrichter. Insbesondere kann das Diagnose-Gerät am Internet angeschlossen sein, wobei dann die Daten große Strecken zum Feldgerät oder Antriebsumrichter zurücklegen. Somit entfallen aber kostspielige Reisekosten der Service-Techniker und die Kommunikationskosten werden reduziert.

Bei einer weiteren vorteilhaften Ausgestaltung sind die Geräte über weitere Netzwerke verbunden oder übertragen Daten oder Informationen. Von Vorteil ist dabei, dass auch aus einem sehr indirekt angeschlossenen Netzwerk, wie Internet, Intranet oder dergleichen, Daten an das direkteste Netzwerk, wie Feldbus oder dergleichen, übertragbar sind.

Bei einer weiteren vorteilhaften Ausgestaltung verwendet die Online-Diagnose mindestens Schrift, insbesondere eine Bildschirmanzeige, als Kommunikationsschnittstelle zum Kunden oder Anwender. Dies stellt vorteilhafterweise eine einfache Art der Informationsübergabe dar. Es sind dagegen auch andere Arten, wie akustische, optische oder dergleichen, von der Erfindung umfasst.

Bei einer weiteren vorteilhaften Ausgestaltung wird Hypertext verwendet, insbesondere dass beim Clicken mit einer PC-Maus oder Aktivieren der aktiven Textstellen weitere Informationen zur Hilfe für den Kunden oder Anwender angezeigt wird.

Bei einer weiteren vorteilhaften Ausgestaltung sind Diagnose-Gerät und Feldgerät oder Diagnose-Gerät und Antriebsumrichter in einem Gehäuse untergebracht. Somit kann die Schnittstelle sogar sehr einfach ausfallen, wie entsprechende Auslegung von Layout-Verbindungen auf der Platine oder dergleichen.

Bei einer vorteilhaften Ausgestaltung sind Diagnose-Gerät und ein Gerät in einem Gehäuse untergebracht. Von Vorteil ist dabei, dass die Online-Diagnose integriert ist in die Automatisierungsanlage.

Bei einer vorteilhaften Ausgestaltung bietet die Online-Diagnose dem Kunden oder Anwender eine Möglichkeit, weitere Informationen, insbesondere FAQ, derart zur Online-Diagnose hinzuzufügen, dass diese Informationen dem Kunden oder Anwender problemorientiert, benutzergeführt und interaktiv zur Verfügung stehen. Dadurch ist das Wissen der Online-Diagnose in vorteilhafter Weise erweiterbar und anpassbar an neue Erfahrungen.

Bei einer vorteilhaften Ausgestaltung besteht eine Möglichkeit der strukturierten Eingabe, insbesondere benutzergeführt, für solche Informationen derart, dass auf eingegebene Fragen fallspezifische Antworten oder fallspezifische Antworten mit weiteren fallspezifischen Fragen und/oder Antworten eingebbar sind. Vorteilhafterweise ist also die ganze Fragestruktur des Ablaufes in einfacher Weise strukturiert eingebbar.

Weitere vorteilhafte Ausgestaltungen ergeben sich aus den Unteransprüchen.

### Bezugszeichenliste

- 1: Antriebsumrichter
- 2: Automatisierungsgerät
- 3: Leitrechner
- 4: Diagnosegerät
- 5: Kommunikationskanal
- NW1: erstes Netzwerk
- NW2: zweites Netzwerk
- NW3: drittes Netzwerk
- NW4: viertes Netzwerk

Die Erfindung wird nun anhand von einer Abbildung näher erläutert:

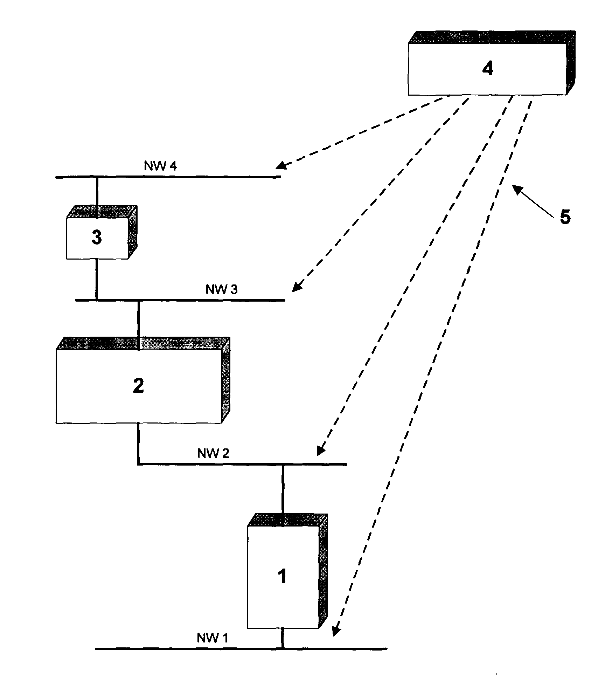

In der Figur ist eine Automatisierungsanlage mit verschiedenen Netzwerken NW1, NW2, NW3, NW4 gezeigt. Der Antriebsumrichter 1 ist dabei an ein erstes Netzwerk NW1 angeschlossen. Dieses kann als sogenannter Systembus ausgeführt werden. Dabei weist der Antriebsumrichter eine für den Systembus geeignete Kommunikationsschnittstelle auf. Der Systembus ist ein Kanal, über welchen insbesondere die Geräte eines Herstellers verbunden werden können und eine schnelle Kommunikation mittels eines Protokolls insbesondere eines Herstellers ermöglicht wird.

Außerdem weist der Antriebsumrichter 1 eine für ein weiteres Netzwerk, hier Feldbus, geeignete Kommunikationsschnittstelle auf, die mit einem zweiten Netzwerk, hier einem Feldbus, verbindbar ist. An diesem zweiten Netzwerk sind mehrere Geräte, insbesondere Feldgeräte, angeschlossen. Des weiteren ist auch ein Automatisierungsgerät 2 angeschlossen, das eine weitere Kommunikationsschnittstelle zum Anschluss eines dritten Netzwerks, hier der Leitebene der Automatisierungsanlage, aufweist. An dieses dritte Netzwerk ist wiederum ein Leitrechner 3 mit einer entsprechenden Kommunikationsschnittstelle angeschlossen, der mit einer weiteren Kommunikationsschnittstelle an ein viertes Netzwerk, hier Intranet, angeschlossen ist. Über weitere Rechnersysteme, hier Firewall, liegt dann auch eine in der Figur nicht eingezeichnete Verbindung zum Internet vor.

Weitere erfindungsgemäße Ausführungsbeispiele weisen weniger oder mehr Netzwerke auf, insbesondere auch andere Topologien oder eine andere Anzahl von Rechnersystemen.

Das Diagnosegerät 4 wird über mindestens einen Kommunikationskanal 5 mit mindestens einem Netzwerk verbunden und weist entsprechende Software, wie Treiber und Protokolle für Informartionsübertragung oder dergleichen, zum Übertragen und Austauschen von Daten und Informationen mit dem Antriebsumrichter 1 auf. Das Diagnosegerät 4 ist derart gestaltet, dass es die erfindungsgemäße Online-Diagnose ausführt. Eine erste erfindungsgemäße Ausführungsform des Diagnosegeräts 4 ist als PC mit mindestens einer entsprechenden Netzwerkkarte ausgestattet.

Am Bildschirm werden Texte angezeigt. Ein Beispiel für einen Diagnose-Ablauf soll nun im Folgenden erläutert werden:

Der Anwender wählt zuerst aus einer 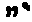 Liste der FAQs (Frequently asked questions)" das für ihn momentan vorherrschende Problem aus, beispielsweise:

| |
|---|
| 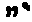 *Umrichter läuft nicht am PROFIBUS*" |

Das Diagnoseprogramm prüft nun automatisch den Parameter 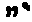 Baudrate des Feldbusses" des Antriebsumrichters und gibt dann dem Kunden weitere Informationen. Wenn beispielsweise keine Datenübertragung möglich ist aus irgendeinem Grund, wie fehlender Anschluss der Feldbusverkabelung, defektem Feldbus oder dergleichen, wird die Meldung

| |
|---|
| 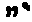 *Es wurde keine Baudrate erkannt*! |
| *Schalten Sie den Busmaster ein oder überprüfen Sie die Busverkabelung*." |

angezeigt. Wenn aber eine Datenübertragung möglich ist, wird deren Übertragungsrate ausgelesen
und angezeigt:

| |
|---|
| 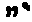 *Es wurde die Baudrate 500kBaud erkannt*. |
| *Busverkabelung ist in Ordnung*." |

Im nächsten Schritt überprüft das Diagnoseprogramm den Parameter 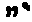 Adresse des Feldbusses" und fragt den Anwender nach der Plausibilität:

| |
|---|
| 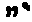 Sie haben die Feldbus-Adresse 27 vergeben. |
| Überprüfen Sie die Projektierung im Busmaster. |
| Stimmt die Feldbus-Adresse mit Ihrer Projektierung überein ? |
| Drücken Sie JA oder NEIN. |

Der Kunde oder Anwender kann nun auswählen und einen Bereich am Bildschirm mittels Tasten, Maus oder bei einem berührungsempfindlichen Bildschirm mittels Handberührung auswählen. Also eine interaktive Kommunikation ausführen und auf solche gestellten Fragen der Online-Diagnose antworten. Im ausgeführten Fallbeispiel erhält der Kunde bei der Eingabe von 'NEIN' den Hinweis

| |
|---|
| 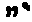 *Für einen korrekten Datenübertrag müssen die im Busmaster projektierte und am DIP-Schalt*er *eingestellte Feldbus-Adresse übereinstimmen. Führen Sie nun die Änderungen durch und starten sie gegebenenfalls diese Diagnose erneut.*" |

Bei der Eingabe von 'JA' überprüft das Diagnoseprogramm alle Parameter zur Prozessdatenbelegung und zeigt diese an.

| | |
|---|---|
| *Sie haben die Prozessdatenkonfiguration* 〈*Parameter + 3PD* 〉 *gewählt. Sie können den Antriebsumrichter parametrieren und über drei Prozessdaten steuern*. *Sie haben folgende Prozessdatenbelegung gewählt:* | |
| *Prozess-Ausgangswort 1, Sollwert vom Busmaster:* 〈*Steuerwort 1*〉 | *'Motor-Starten'* |
| *Prozess-Ausgangswort 2, Sollwert vom Busmaster:* 〈*Drehzahl [%]*〉 | *50 %* |
| *Prozess-Ausgangswort 3, Sollwert vom Busmaster:* 〈*Rampe*〉 | *1 s* |
| *Prozess-Eingangswort 1, Istwert zum Busmaster:* 〈*Statuswort 1*〉 | *'Motor dreht'* |
| *Prozess-Eingangswort 2, Istwert zum Busmaster:* 〈*Drehzahl [%]*〉 | *49 %* |
| *Prozess-Eingangswort 3, Istwert zum Busmaster:* 〈*Ausgangsstrom [%]*〉 | *70 %* |

Weitere erfindungsgemäße Ausführungsbeispiele weisen auch Hypertext auf, also können Wörter oder Textteile aktiviert werden und den mit ihnen verknüpften Informationsgehalt, wie Text, Text mit Hypertext oder dergleichen, zur Anzeige bringen. Insbesondere ist auf diese Weise Zusatzinformation zur Hilfe für den Kunden oder Anwender verbunden.

Ein weiteres erfindungsgemäßes Ausführungsbeispiel liefert dem Kunden oder Anwender Datensätze, die das Verhalten des Systems zeigen. Insbesondere sind diese Datensätze Messwerte des Antriebsumrichters 1 oder als Modellwerte berechnete Werte des Antriebsumrichters 1,die in ihrer zeitlichen Abfolge als ein solcher Datensatz hinterlegbar sind. Das Diagnose-Gerät weist eine Einrichtung zur Visualisierung dieser Datensätze auf, beispielsweise sind auf diese Art und Weise der zeitliche Verlauf von Strom-, Spannungs- und/oder Drehmomentwerten oder dergleichen darstellbar. Diese Schaubilder vom zeitlichen Verlauf physikalischer oder anderer Größen sind derart verwendbar, dass auf eine Antwort, die der Kunde oder Anwender der Online-Diagnose eingibt oder zuführt, ein solcher Datensatz angezeigt wird, gegebenenfalls graphisch. Somit kann der Anwender oder Kunde im obigen Beispiel auch den Signalverlauf der Steuerinformation des Feldbusses angezeigt bekommen.

In weiteren erfindungsgemäßen Ausführungsbeispielen ist das Diagnosegerät 4 als Hardware oder Software mit akustischen, optischen, elektrischen oder mechanischen Kommunikationsmitteln für den Benutzer ausgestattet. In weiteren Ausführungsbeispielen ist das Diagnosegerät 4 ohne Mikroprozessoren ausgebildet, also mit einfachen integrierten Schaltkreisen und/oder aktiven und passiven elektronischen Bauelementen. Bei weiteren erfindungsgemäßen Ausführungsbeispielen ist die Anzeige keine Bildschirmanzeige, also keine LCD- oder Elektronenröhren-Bildschirm, sondern es werden die verschiedenen Texte, wie Fragen, Antworten oder dergleichen mit Leuchten beleuchtet. Die Eingabe der Antworten erfolgt dabei durch berührungssensitive Vorrichtungen.

Die Erfindung umfasst auch Vorrichtungen, bei denen beliebige andere Feldgeräte mittels Netzwerken mit Geräten, wie Rechner oder dergleichen, verbindbar sind. In einem weiteren Ausführungsbeispiel sind Hausgeräte mit einem EIB-Bus oder ähnlichem verbindbar und weisen die Erfindung auf.

In weiteren Ausführungsbeispielen wird die Erfindung auf Telekommunikationsanlagen oder medizinische Geräte oder im Automobilbereich, insbesondere mit CAN-Bus, angewendet.

## Patentansprüche

1. Online-Diagnose für ein Diagnose-Gerät
**dadurch gekennzeichnet, dass**
sie problemorientiert, benutzergeführt und interaktiv ist,
und dass sie bei einem Feldgerät oder Antriebsumrichter angewendet wird,
und dass Parameter des Antriebsumrichters oder Feldgerätes durch das Diagnose-Gerät beeinflussbar und Daten oder Informationen zwischen Antriebsumrichter und Diagnose-Gerät übertragbar sind,
wobei das Diagnosegerät Daten oder Informationen mit einem ersten Netzwerk tauscht,
und wobei das Feldgerät oder der Antriebsumrichter Daten oder Informationen mit einem zweiten Netzwerk tauscht,
und wobei erstes und zweites Netzwerk Daten oder Informationen entweder direkt oder indirekt austauschen.

2. Online-Diagnose für ein Diagnose-Gerät
**dadurch gekennzeichnet, dass**
sie problemorientiert, benutzergeführt und interaktiv ist,
und dass sie bei einem Feldgerät oder Antriebsumrichter angewendet wird,
und dass Parameter des Antriebsumrichters oder Feldgerätes durch das Diagnose-Gerät beeinflussbar und Daten oder Informationen zwischen Antriebsumrichter und Diagnose-Gerät übertragbar sind,
wobei das Diagnosegerät Daten oder Informationen dem Feldgerät oder dem Antriebsumrichter tauscht.

3. Online-Diagnose nach Anspruch 1 oder 2,
**dadurch gekennzeichnet, dass**
erstes und zweites Netzwerk identisch sind oder als Schnittstelle, insbesondere als Systembus, ausgebildet sind.

4. Online-Diagnose nach Anspruch 1 oder 2,
**dadurch gekennzeichnet, dass**
erstes und zweites Netzwerk über mindestens ein Gerät, insbesondere einen Rechner, verbunden sind oder Daten oder Informationen übertragen
und/oder dass
die Geräte über weitere Netzwerke verbunden sind oder Daten oder Informationen übertragen.

5. Online-Diagnose nach mindestens einem der vorangegangenen Ansprüche,
**dadurch gekennzeichnet, dass**
die Online-Diagnose mindestens Schrift, insbesondere eine Bildschirmanzeige, als Kommunikationsschnittstelle zum Kunden oder Anwender verwendet
und/oder dass
Hypertext verwendet wird, insbesondere dass beim Clicken mit einer PC-Maus oder Aktivieren der aktiven Textstellen weitere Informationen zur Hilfe für den Kunden oder Anwender angezeigt wird.

6. Online-Diagnose nach mindestens einem der vorangegangenen Ansprüche,
**dadurch gekennzeichnet, dass**
Diagnose-Gerät und Feldgerät oder Diagnose-Gerät und Antriebsumrichter in einem Gehäuse untergebracht sind.

7. Online-Diagnose nach mindestens einem der Ansprüche 1 bis 5,
**dadurch gekennzeichnet, dass**
Diagnose-Gerät und ein Gerät in einem Gehäuse untergebracht sind.

8. Online-Diagnose nach mindestens einem der vorangegangenen Ansprüche,
**dadurch gekennzeichnet, dass**
die Online-Diagnose dem Kunden oder Anwender eine Möglichkeit bietet, weitere Informationen, insbesondere FAQ, derart zur Online-Diagnose hinzuzufügen, dass diese Informationen dem Kunden oder Anwender problemorientiert, benutzergeführt und interaktiv zur Verfügung stehen,
und/oder dass
eine Möglichkeit der strukturierten Eingabe, insbesondere benutzergeführt, dieser Informationen derart besteht, dass auf eingegebene Fragen fallspezifische Antworten oder fallspezifische Antworten mit weiteren fallspezifischen Fragen und/oder Antworten eingebbar sind.

9. Diagnose-Gerät für ein Feldgerät oder für einen Antriebsumrichter
wobei das Diagnose-Gerät mindestens eine Kommunikationsschnittstelle aufweist,
**dadurch gekennzeichnet, dass**
das Diagnosegerät über die Kommunikationsschnittstelle mit einem ersten Netzwerk zum Austausch von Daten oder Informationen verbindbar ist,
und dass das Feldgerät oder der Antriebsumrichter mit einem zweiten Netzwerk zum Austausch von Daten oder Informationen verbindbar ist,
und wobei erstes und zweites Netzwerk zum Austausch von Daten oder Informationen direkt oder indirekt, also über mindestens ein zwischengeschaltetes Gerät oder Netzwerk, verbindbar sind,

10. Diagnose-Gerät für ein Feldgerät oder für einen Antriebsumrichter
wobei das Diagnose-Gerät mindestens eine Kommunikationsschnittstelle aufweist,
**dadurch gekennzeichnet, dass**
das Diagnosegerät über die Kommunikationsschnittstelle mit einem ersten Netzwerk zum Austausch von Daten oder Informationen verbindbar ist,
und dass das Feldgerät oder der Antriebsumrichter mit einem zweiten Netzwerk zum Austausch von Daten oder Informationen verbindbar ist,
und wobei erstes und zweites Netzwerk zum Austausch von Daten oder Informationen direkt oder indirekt, also über mindestens ein zwischengeschaltetes Gerät oder Netzwerk, verbindbar sind,

11. Diagnose-Gerät nach Anspruch 9 oder 10,
**dadurch gekennzeichnet, dass**
erstes und zweites Netzwerk identisch sind oder als Schnittstelle, insbesondere als Systembus, ausgebildet sind.

12. Diagnose-Gerät nach Anspruch 9 oder 10,
**dadurch gekennzeichnet, dass**
erstes und zweites Netzwerk über mindestens ein Gerät, insbesondere einen Rechner, verbunden sind zum Austausch von Daten oder Informationen
und/oder dass
die Geräte über weitere Netzwerke verbunden sind zum Austausch von Daten oder Informationen.

13. Diagnose-Gerät nach mindestens einem der vorangegangenen Ansprüche,
**dadurch gekennzeichnet, dass**
das Diagnose-Gerät derart gestaltet, dass zur Online-Diagnose mindestens Schrift, insbesondere eine Bildschirmanzeige, als Kommunikationsschnittstelle zum Kunden oder Anwender verwendet wird
und/oder dass
das Diagnose-Gerät derart gestaltet, dass Hypertext in der Bildschirmanzeige verwendet wird, insbesondere dass beim Clicken oder Aktivieren der aktiven Textstellen weitere Informationen zur Hilfe für den Kunden oder Anwender angezeigt wird
und/oder dass
Diagnose-Gerät und Feldgerät oder Diagnose-Gerät und Antriebsumrichter in einem Gehäuse untergebracht sind.

14. Diagnose-Gerät nach mindestens einem der Ansprüche 9 bis 13,
**dadurch gekennzeichnet, dass**
Diagnose-Gerät und ein Gerät in einem Gehäuse untergebracht sind.
